# EUROPÄISCHE PATENTSCHRIFT

(11) **EP 1 912 300 B1**
(45) Veröffentlichungstag und Bekanntmachung des Hinweises auf die Patenterteilung: **14.11.2012**
(21) Anmeldenummer: 07115543.6
(22) Anmeldetag: 03.09.2007
(51) Int. Cl.: H02B 1/21

(54) **Sammelschienenadapter**
Busbar adapter
Adaptateur de barre collectrice

(30) Priorität: 13.10.2006 DE 102006048639
(43) Veröffentlichungstag der Anmeldung: 16.04.2008
(73) Patentinhaber: Wöhner GmbH & Co. KG Elektrotechnische Systeme, 96472 Rödental (DE)
(72) Erfinder: Bütnerr, Alex, 96472 Rödental (DE); Florian, René, 96487 Dörfles-Esbach (DE)
(74) Vertreter: Isarpatent

(56) Entgegenhaltungen:
- EP-A- 1 271 727
- DE-A1-102005 012 364

## Beschreibung

Die Erfindung betrifft einen Sammelschienenadapter mit einem Gehäuse zur Aufnahme von Verbindungsschienen und mit Klemmbügeln zur Befestigung des Gehäuses gegenüber Sammelschienen sowie mit einer Abdeckplatte zum berührungssicheren Abdecken der Verbindungsschienen.

In der EP 1 271 727 A ist ein elektrisches Installationsgerät beschrieben, bei dem für jede Klemme zwei Kammerabschnitte vorgesehen sind, so dass die Klemmen in unterschiedliche Kammerabschnitte eingesetzt werden können. Die Kammerabschnitte sind hierbei zylindrisch ausgebildet und ermöglichen ein Drehen ihrer Klemme um eine vorgegebene Achse.

Aus der DE 10 2005 012 364 A1 ist ein Lasttrennschalter bekannt, bei dem Klemmen in Form von T-förmigen Rasthaken vorgesehen sind, die zum Übergreifen von Sammelschienen dienen. Mit der T-förmigen Ausbildung von Hakenenden der Klemmen ist es möglich, die Sammelschienen beidseitig der Klemmen vorzusehen.

Ein Adapter für Sammelschienen entsprechend der eingangs erwähnten Art ist aus der DE 196 39 616 A1 bekannt. Bei einem derartigen Sammelschienenadapter 3-poliger Art sind in dem Gehäuse drei Verbindungsschienen im Wesentlichen parallel zueinander vorgesehen, die über Stege gegeneinander isoliert sind. An vorgegebenen Stellen ist jede Verbindungsschiene mit einem Klemmbügel versehen, der an der Unterseite des Gehäuses vorsteht und dazu dient, die Sammelschiene teilweise zu übergreifen und zu kontaktieren. Bei dem bekannten Sammelschienenadapter erfolgt hierbei die elektrische Kontaktierung hauptsächlich zwischen Verbindungsschiene und Sammelschiene, d.h. jeder Klemmbügel hat im Wesentlichen die Funktion, den Adapter an der betreffenden Sammelschiene zu halten. Da bei dieser Ausführungsform die Klemmbügel aus Metall bestehen, haben sie zusätzlich die Funktion, Strom zu führen, der hauptsächliche elektrische Kontakt erfolgt aber direkt zwischen Sammelschiene und Verbindungsschiene.
Ein derartiger Adapter für Sammelschienen ermöglicht den Einsatz von Klemmbügeln nur in einer vorgegebenen Richtung, d.h. der Adapter ist nur in einer vorbestimmten Lage auf die Sammelschienen aufsetzbar.

Der Erfindung liegt die Aufgabe zugrunde, einen Sammelschienenadapter zu schaffen, der in zwei Richtungen auf die Sammelschienen aufsetzbar ist, d.h der im Bedarfsfalle auch um 180° gedreht auf die Sammelschienen aufgesetzt werden kann, sodass die Anschlusskontakte wahlweise oben liegend oder unter liegend, d.h. je nach Positionierung des Adapters, zugänglich sind.

Bei dem erfindungsgemäßen Adapter ist die Anbringung jeweils in einer um 180° verdrehter Positionen dadurch möglich, dass das Gehäuse zur Aufnahme der Klemmbügel mit Kammern versehen ist. Jede Kammer hat eine Längendimension, die doppelt so groß ist wie die Länge eines Klemmbügels, so dass jeweils der Einsatz eines Klemmbügels an einer von zwei Positionen in einem von jeweils zwei Kammerabschnitten innerhalb der Kammer ermöglicht wird. Gemäß der Erfindung weist jede Kammer also zwei Kammerabschnitte auf, die in einer Richtung quer zur betreffenden Sammelschiene ausgebildet sind. Die Klemmbügel werden jeweils in einen der beiden Kammerabschnitte jeder Kammer eingesetzt, d.h. bei einem 3-poligen Adapter werden die Klemmbügel jeweils in den oberen Kammerabschnitt eingesetzt, während der untere Kammerabschnitt frei bleibt, sodass die Klemmbügel die Sammelschienen von deren Oberkante her übergreifen. Je nach Positionierung des Adapters werden somit die Klemmbügel in denjenigen Kammerabschnitt eingesetzt, der entweder direkt benachbart ist zu den Kontaktelementen oder in denjenigen Kammerabschnitt, der zu den Kontaktelementen abgewandt ist.

Bei einer bevorzugten Ausführungsform sind die Verbindungsschienen in demjenigen Bereich, der unterhalb der Kammer angeordnet ist, gekröpft oder vertieft ausgebildet, wobei die Vertiefung über eine Länge der Verbindungsschiene verläuft, die etwa gleich groß ist wie bei der aus den beiden Kammerabschnitten gebildeten Kammer. Damit ist sichergestellt, dass die Klemmbügel jeweils in den vertieften Abschnitt der Verbindungsschienen eingeführt werden können.

Bei dem erfindungsgemäßen Adapter sind weiterhin Abdeckelemente vorgesehen, vorzugsweise im Bereich der einzelnen Kammern wie auch vorzugsweise im Bereich der Kontaktelemente, um den Adapter berührungssicher zu gestalten.

Im Folgenden werden bevorzugte Ausführungsformen des erfindungsgemäßen Adapters zur Erläuterung weiterer Merkmale beschrieben. Es zeigen:
Fig. 1 eine auseinandergezogene Darstellung zur Erläuterung einer bevorzugten Ausfiihrungsform des erfindungsgemäßen Adapters zusammen mit einem Schaltgerät und den Sammelschienen;
Fig. 2 eine Detaildarstellung des Adapters zusammen mit den Sammelschienen;
Fig. 3a und 3b Schnittansichten durch den Adapter entsprechend der Linie III-III' in Fig. 2;

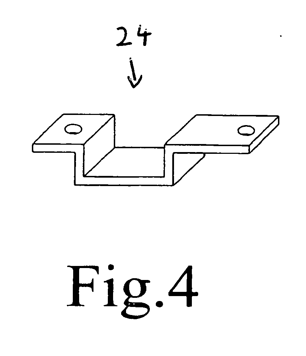

Fig. 4 eine Darstellung einer abgewandelten Ausführungsform, bei welcher die Verbindungsschienen einen gekröpften bzw. vertieften Kontaktabschnitt aufweisen, und
Fig. 5a bis 5c Darstellungen zur Erläuterung des Einbringens der Klemmbügel in den Adapter.

Nachfolgend wird auf die Zeichnungen Bezug genommen.

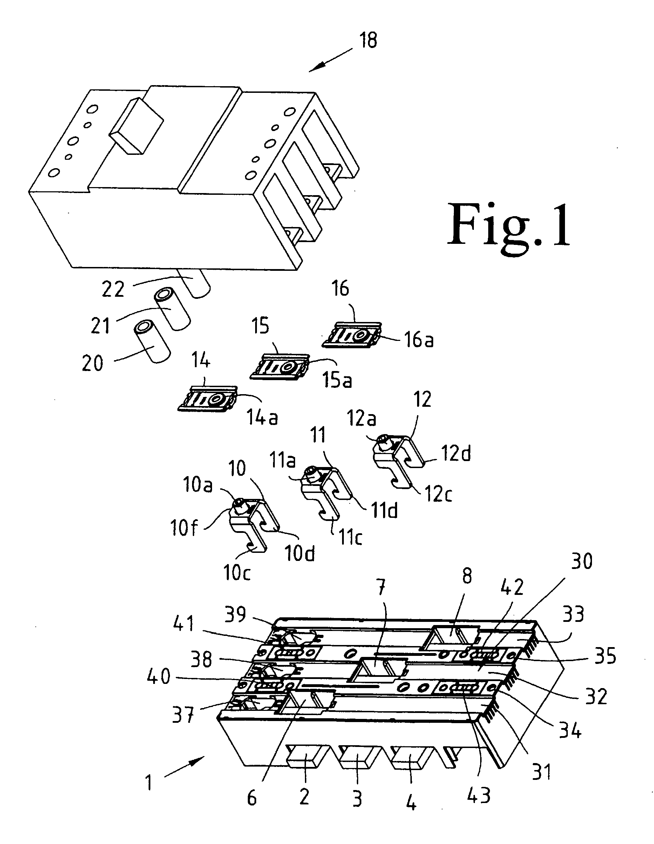

Fig. 1 zeigt eine auseinandergezogene Darstellung eines Adapters mit den zugehörigen Sammelschienen und einem Schaltgerät, welches auf den Adapter aufgesetzt werden kann. Der Adapter gemäß der Erfindung ist in Fig. 1 mit 1 bezeichnet, die unterhalb des Adapters liegenden Sammelschienen sind mit 2, 3, 4 bezeichnet. Bei der in Fig. 1 gezeigten Darstellung ist der Sammelschienenadapter 1 auf die Sammelschienen 2, 3, 4 aufgesetzt. Der Adapter 1 weist Kammern 6, 7, 8 auf, die im Wesentlichen senkrecht zu den Sammelschienen 2, 3, 4 verlaufen und die eine quer zur Richtung der Sammelschienen 2, 3, 4 dimensionierte Länge beinhalten, die größer ist als die Breite der Sammelschienen 2, 3, 4. Die Kammer 6 dient bei dem Adapter 1 zum Einführen eines Klemmbügels 10, die Kammer 7 dient zur Aufnahme des Klemmbügels 11 und die Kammer 8 dient zur Aufnahme des Klemmbügels 12, wie dies nachfolgend noch beschrieben wird.

Wenn der Adapter 1 mittels der Klemmbügel 10, 11, 12 auf den Sammelschienen 2, 3, 4 festgeklemmt ist, wie dies noch nachfolgend erläutert wird, weiterhin die Öffnungen der Kammern 6, 7, 8 durch mit 14, 15, 16 bezeichnete Abdeckelemente verschlossen sind, kann das mit 18 bezeichnete Schaltgerät auf den Adapter 1 aufgesetzt und elektrisch mit dem Adapter 1 verbunden werden. Zur elektrischen Verbindung zwischen Adapter 1 und Schaltgerät 18 dienen Kontaktelemente 20, 21, 22, vorzugsweise in Form von hohlzylindrischen Kupferelementen bzw. -rohren, welche in elektrischen Kontakt mit dem innerhalb des Adapters 1 verlaufenden Verbindungsschienen gebracht werden. Insoweit wird auf die DE 196 39 616 verwiesen. Die Verbindung zwischen Adapter 1 und Schaltgerät 18 durch der Kontaktelemente 20, 21, 22 erfolgt entsprechend der DE 196 39 616 durch die Kontaktelemente 20, 21, 22 durchgreifende Schrauben.

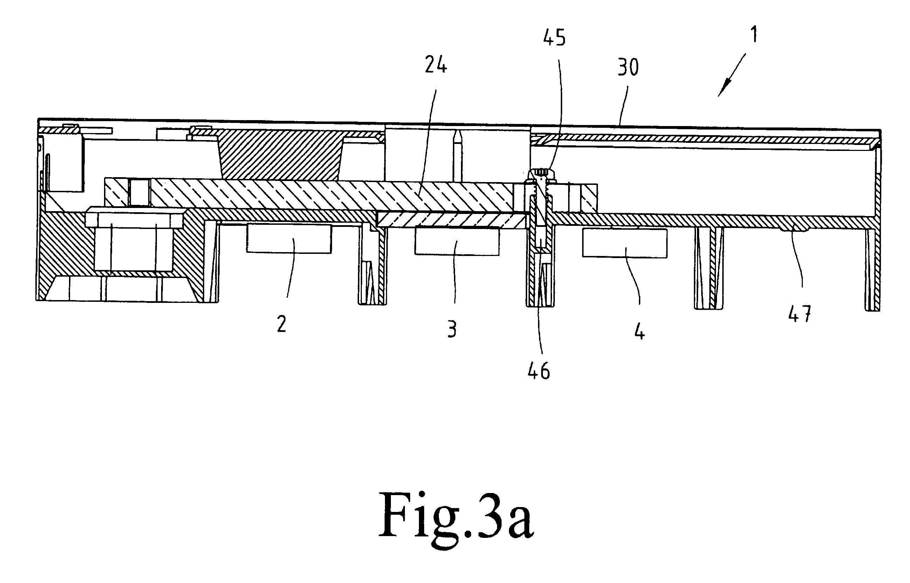

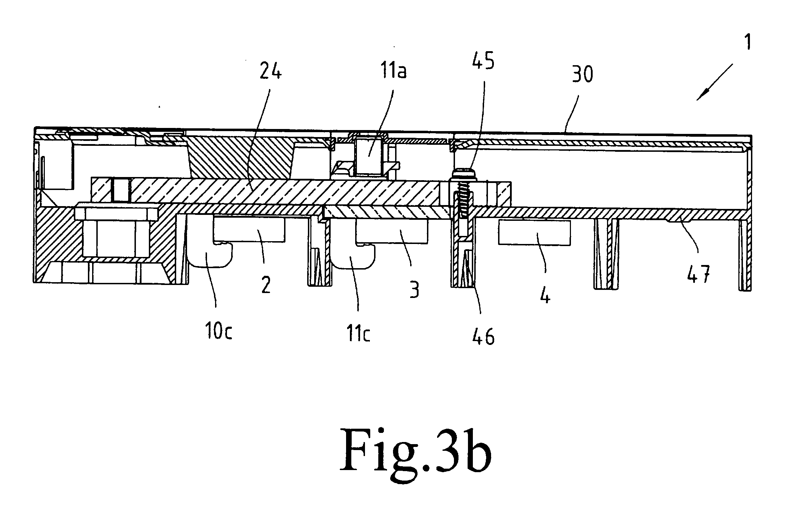

Der erfindungsgemäße Adapter weist bei einem 3-poligen Schaltgerät drei Verbindungsschienen auf, von denen Fig. 3a und 3b eine Verbindungsschiene 24 veranschaulicht, die zur elektrischen Verbindung gegenüber der mittleren Sammelschiene 3 dient.

Bei dem erfindungsgemäßen Adapter sind die Kammern 6 bis 8 so ausgestaltet, dass jeweils zwei Kammerabschnitte 6a, 6b bzw. 7a, 7b und 8a, 8b pro Kammer 6 bis 8 gebildet sind, von denen jeder Kammerabschnitt separat zur Aufnahme eines Klemmbügels vorgesehen ist.

Die Verbindungsschienen 24 können einen geraden Verlauf haben oder einen tiefgesetzten Bereich einschließen, wie dies aus der DE 196 39 616 bekannt ist, sodass eine Verbindungsschiene entsprechend DE 196 39 616 in direkten Kontakt gebracht wird mit der zugehörigen Sammelschiene und/oder es wird der elektrische Kontakt durch die Klemmbügel 10, 11, 12 gegenüber der zugehörigen Verbindungsschiene einerseits und der Stromsammelschiene andererseits hergestellt, d.h. in diesem Falle muss die Verbindungsschiene 24 nicht direkt die Sammelschiene kontaktieren.

Die Klemmbügel haben die aus Fig. 1 ersichtliche Form und entsprechen insoweit denen der DE 196 39 616, auf die hiermit Bezug genommen wird. Jeder Klemmbügel 10, 11, 12 ist mit einer Klemmschraube 10a, 11 a, 12a versehen, die dazu dient, den Klemmbügel gegen die jeweilige Stromschiene zu klemmen, um den Adapter sicher gegenüber der Anordnung der Stromschienen 2, 3, 4 zu fixieren wie dies aus Figur 3b ersichtlich ist. Die Klemmbügel 10, 11, 12 bestehen vorzugsweise aus Metall und übergreifen im arretierten Zustand die jeweilige Stromschiene 2, 3, 4, wie dies an sich bekannt ist.

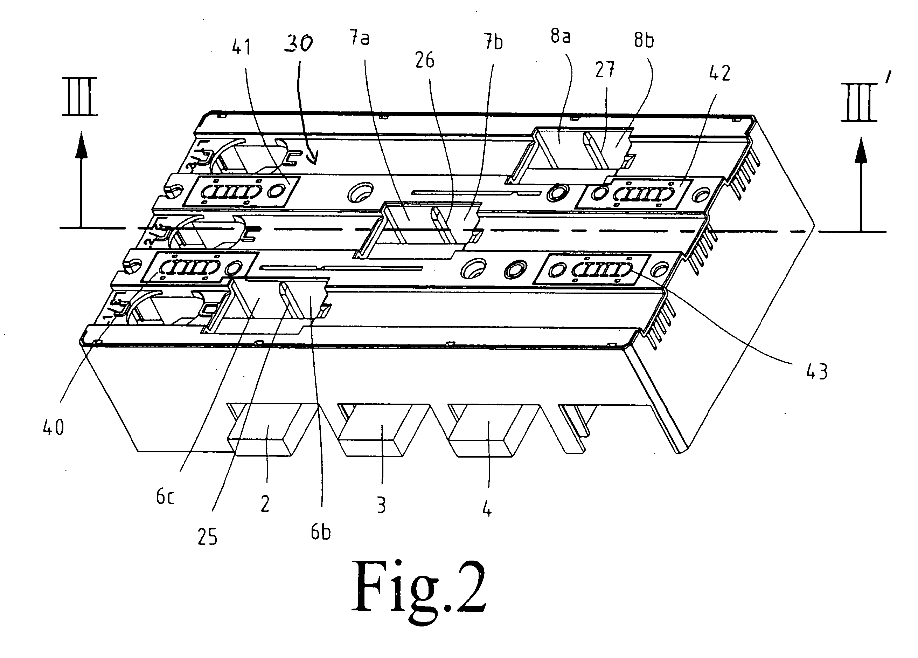

Bei dem in Fig. 2 dargestellten Adapter 1 mit den zugehörigen Stromschienen 2, 3, 4 befinden sich die Stromschienen 2, 3, 4 weitgehend unterhalb der Kammerabschnitte 7a, 8a, 8b, so dass die Klemmbügel 10, 11, 12 in die Kammerabschnitte 6b, 7b, 8b eingeführt werden und auf diese Weise mit ihren Fußabschnitten 10c, 10d usw. die Sammelschienen 2, 3, 4 übergreifen. Die Klemmschrauben 10a ff. sind in ein Gewinde eingeschraubt, das in einer die Klemmfiiße 10c, 10d usw. verbindenden Brücke ausgebildet ist und stehen in Richtung der Klemmfüße 10c, 10d usw. vor. Hierbei sind die Anschlüsse des Adapters 1 gegenüber dem zugehörigen Schaltgerät 18 oder dergleichen in Fig. 2 auf der linken Seite und somit links der Sammelschienenanordnung angeordnet. Wird der Adapter 1 demgegenüber um 180° gedreht, dann sind die Klemmbügel in die Kammerabschnitte 6a, 7a, 8a einzusetzen und in diesem Fall befinden sich die Anschlüsse des Adapters 1 rechts der Anordnung der Sammelschienen 2, 3, 4.

Bei der dargestellten Ausführungsform definiert jede Kammer 6, 7, 8 ein solchen großen Raum, dass rein theoretisch insgesamt jeweils zwei der Klemmbügel eingesetzt werden können. Es wird aber jeweils nur ein Klemmbügel entweder in die Kammerabschnitte 6a, 7a, 8a oder in die Kammerabschnitte 6b, 7b, 8b eingesetzt, wie dies vorstehend erläutert ist, um die Stromsammelschienen entweder von der einen Seitenkante her oder von der anderen Seitenkante zu übergreifen. Zur Trennung der Kammern 6, 7, 8 in die Kammerabschnitte 6a, 6b, 7a, 7b und 8a, 8b ist bei der dargestellten Ausführungsform eine Führungseinrichtung in Form von Führungsrippen vorgesehen, von welchen in Fig. 2 nur die Führungsrippen 25, 26, 27 dargestellt sind, die an der nach hinten weisenden Kammerwand der Kammern 6, 7, 8 vorgesehen sind. Diese Führungsrippen bzw. Führungsrippenpaare teilen somit jede Kammer in die Kammerabschnitte 6a, 6b usw. und dienen dazu, dass jeweils nur ein Klemmbügel passgenau in die Kammer in Richtung auf die aus Fig. 2 nicht erkennbaren Verbindungsschienen aufgesetzt werden kann. Evg. 1

Die Klemmbügel 10, 11, 12 liegen dann ersichtlicherweise auf der jeweiligen Verbindungsschiene 24 im Bereich eines der Kammerabschnitte 6a bis 8b auf oder befinden sich innerhalb des tiefgezogenen bzw. gekröpften Bereichs der jeweiligen Verbindungsschiene, der über etwa die gesamte Länge der Kammer 6, 7, 8 hinweg ausgebildet ist.

Jeder Klemmbügel ist an seiner die Klemmfüße verbindenden Fläche 10f mit einer mittigen, wegstehenden Nase 50 ausgerüstet.

Nach dem Aufsetzen des Adapters auf die Anordnung der Sammelschienen 2, 3, 4 übergreifen die Klemmbügel 10, 11, 12 die jeweilige Sammelschiene 2, 3, 4. Entsprechend dem Anpressdruck der Klemmschrauben 10a, 11a, 12a werden die Klemmbügel 10, 11, 12 gegen die jeweilige Stromsammelschiene gezogen, um eine Fixierung gegenüber den Stromsammelschienen 2, 3, 4 sicherzustellen. Dabei stehen die Klemmschrauben 10a, 11a, 11b in Kontakt mit der jeweiligen Verbindungsschiene 24, und stützen sich gegen die jeweilige Verbindungsschiene ab.

Die einzelnen Kammern 6, 7, 8 werden vorzugsweise durch plattenförmige Abdeckelemente 14, 15, 16 abgeschlossen, sobald die Klemmbügel 10, 11, 12 in die jeweilige Kammer 6, 7, 8 eingesetzt sind. Jedes Abdeckelement 14, 15, 16 ist vorzugsweise mit einer ringförmigen Öffnung 14a, 15a, 16a versehen, die dazu dient, mittels eines Schlüssels oder dergleichen durch die Abdeckelemente 14, 15, 16 hindurch die Klemmschrauben 10a, 11 a, 12a betätigen zu können. Voraussetzung dafür ist, dass die ringförmigen Öffnungen 14a, 15a, 16a gegenüber den Klemmschrauben 10a, 11 a, 12a fluchten, da mittels einem isolierten Steckschlüssel oder dergleichen die Klemmschrauben der Klemmbügel 10, 11, 12 gedreht werden können.

Wie sich aus den Fig. 1 und 2 weiter ergibt, ist die Oberseite des Adapters 1 durch eine Abdeckplatte 30 abgeschlossen. Die Abdeckplatte 30 ist gegenüber dem restlichen Gehäuse des Adapters vorzugsweise als separates Element vorgesehen und auf das Gehäuse aufgesetzt. Die Abdeckplatte 30 weist den Kammern 6, 7, 8 entsprechende Öffnungen auf. In Längsrichtung der Kammern 6, 7, 8 sind in der Abdeckplatte 30 nutförmige Vertiefungen 33 vorgesehen, zwischen welchen überstehende Stege 34, 35 angeordnet sind. Am einen Ende der Abdeckplatte 30 befinden sich Öffnungen 37, 38, 39 zur Aufnahme der Verbindungselemente 20, 21, 22. Die Öffnungen 37, 38, 39 sind in Form von Langlöchern ausgebildet und werden durch innerhalb der Nuten 31, 32, 33 verstellbare oder verschiebbare Abdeckplatten berührungssicher abgeschlossen, (die nicht dargestellt sind). Damit ist es möglich, die Verbindungselemente 20, 21, 22 an unterschiedlichen Positionen in Längsrichtung zur jeweiligen Nut 31, 32, 33 einzusetzen, um eine Anpassung an unterschiedlich große Schaltgeräte oder andere Einrichtungen 18 zu ermöglichen. Die Verbindungselemente 20, 21, 22 müssen daher nicht immer exakt an ein und der gleichen Position in den Adapter 1 eingeführt werden.

Zur Befestigung der Schaltgeräte 18 oder anderer Einrichtung ist bei der dargestellten Ausführungsform nach Fig. 1 und Fig. 2 vorgesehen, dass im Bereich der Stege 34 und nahe der beiden Stirnseiten Montageplatten 40 bis 43 vorgesehen sind, die unterschiedliche und gegebenenfalls unterschiedlich große Bohrungen aufnehmen, mittels welcher die Schaltgeräte 18 auf dem Adapter über diese Montageplatten 40 bis 43 befestigt werden können.

Aus der Schnittansicht nach Fig. 3a und 3b ist ersichtlich, dass der Adapter 1 eine Abdeckplatte 30 aufweist, unterhalb welcher die vorzugsweise parallel zueinander verlaufenden Verbindungsschienen 24 vorgesehen sind. Die Verbindungsschienen 24 liegen parallel und in einem Abstand zueinander im Gehäuse und verlaufen etwa parallel zu den Nuten 31, 32, 33 von der Anschlussfläche entsprechend den Öffnungen 37, 38, 39 mindestens bis zu der jeweiligen Sammelschiene 2, 3, 4. Da es erforderlich sein kann, die Positionierung der jeweiligen Verbindungsschiene 24 innerhalb des Gehäuses des Adapters 1 zu verstellen, sind die Verbindungsschienen 24 längs verstellbar innerhalb des Adapters 1 vorgesehen und werden an der jeweils richtigen Position mittels Schrauben 45 fixiert, die jeweils in eine mit 46 bezeichnete Bohrung des Adapters 1 eingeschraubt werden können. Die Bohrungen befinden sich in Stegen 47, welche als Trennstege (Fig. 3a, 3b) zwischen den Sammelschienen 2, 3 an der Gehäuseunterseite ausgebildet sind.

Die Erfindung schafft somit einen Adapter für Sammelschienen, der außerordentlich flexibel anwendbar ist, und bei dem sowohl die Anschlussrichtung durch Drehen des Adapters gegenüber den Sammelschienen 2, 3, 4 ohne Weiteres veränderbar ist, lediglich den unterschiedlichen Einsatz der Klemmbügel voraussetzt, als auch zusätzlich die Anschlusspunkte hinsichtlich der Anschlusselemente 20, 21, 22 wie auch die Positionierung der Verbindungsschienen 24 innerhalb des Gehäuses variierbar gestaltet sind.

Bei dem erfindungsgemäßen Adapter sind die in verschiedene Kammerabschnitte aufgeteilten Kammern 6, 7, 8 im auf die Sammelschienen 2, 3, 4 aufgesetzten Zustand jeweils an den Kreuzungsstellen zwischen Verbindungsschiene und zugehöriger Sammelschiene vorgesehen, wobei die durch die Kammern 6, 7, 8 definierte Öffnung den Kreuzungsbereich zumindest über die Breite der jeweiligen Sammelschiene 2, 3, 4 hinaus übersteigt. Dadurch ist es möglich, dass die Klemmbügel jeweils in den einen oder in den anderen der Kammerabschnitte 6a, 6b bzw. 7a, 7b bzw. 8a, 8b eingesetzt werden können, um die Sammelschienen 2, 3, 4 jeweils von der einen Seitenkante her oder von der anderen Seitenkante her zu übergreifen zum Zwecke der Befestigung des Adapters an den Sammelschienen 2, 3, 4.

Die Ausbildung der Kammern 6, 7, 8 . ist erfindungsgemäß derart getroffen, dass ein Klemmbügel nur in vorgegebener Ausrichtung in den jeweiligen Kammerabschnitt 6a bzw. 6b eingeschoben werden kann.

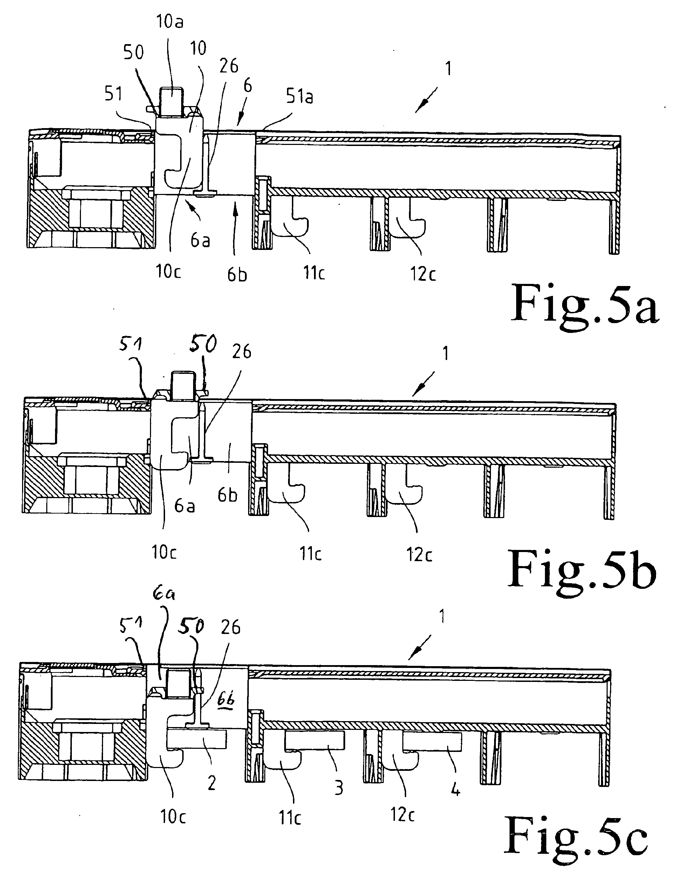

Fig. 5a zeigt den Fall, in welchen der Klemmbügel 10 falsch in die Kammer 6a eingesetzt ist. Nach Fig. 5a stößt die Nase 50 des Klemmbügels 10 an einer gegenüberliegenden Kante 51 des Adapters 1 an, da der Kammerabschnitt 6a eine in Axialrichtung des Adapters 1 dimensionierte Breite aufweist, die kleiner ist als die Breite des Klemmbügels 10 im Bereich der Nase 50. In der dargestellten Ausfiihrungsform lässt sich also der Klemmbügel 10 nur bis zu der in Fig. 5a gezeigten Position in den Kammerabschnitt 6a verbringen, wobei ein weiteres Einschieben durch die Blockierung zwischen Nase 50 und Ansatz 51 verhindert wird.

Wird jedoch der Klemmbügel in der richtigen Position gemäß Fig. 5b eingeführt, lässt er sich in den Kammerabschnitt 6a vollständig einschieben, da die horizontal abstehende Nase 50, die gemäß Fig. 1 mittig zwischen den Fußabschnitten 10c, 10d usw. verläuft, d.h. einen Nasenabschnitt bildet, der gegenüber den Fußabschnitten 10c, 10d in die Mitte versetzt ist, und somit beim richtigen Einsetzen des Klemmbügels 10 zwischen den Führungsrippen 25 der Kammer 6 verlagerbar ist. Wenn der Klemmbügel 10 in der in Fig. 5b gezeigten Weise eingeschoben wird, befindet sich die Nase 50 in einer zu Fig. 5a entgegengesetzten Richtung, d.h. in Richtung der Führungsrippen 25, und zwar zwischen den beiden Paaren von Führungsrippen 25, so dass der Klemmbügel in Fig. 5b nach unten verlagert werden kann in die Position, die Fig. 5c zeigt. In der in Fig. 5c dargestellten Position des Klemmbügels 10 wird der Klemmbügel 10 als Folge der Anlage zwischen der Klemmschraube 10a und der in Fig. 5c nicht dargestellten Verbindungsschiene 24 gegen eine Weiterbewegung in Fig. 5c nach unten blockiert.

Aus den Fig. 5a bis 5c ergibt sich weiterhin, dass beim Einschieben des Klemmbügels 10 in den Kammerabschnitt 6b mit der Ausrichtung des Klemmbügels 10, wie in Fig. 5 a dargestellt, der Klemmbügel 10 komplett in den Kammerabschnitt 6b eingebracht werden kann. Wird hingegen der Klemmbügel 10 mit seiner in Fig. 5b gezeigten Ausrichtung, in welcher die Schenkel 10c nach rechts weisen, in den Kammerabschnitt 6b eingesetzt, dann wird ein komplettes Einschieben dadurch verhindert, dass die Nase 50 an der gegenüberliegenden Kante 51a auftrifft.

Die Verhinderung eines falschen Einsetzens der Klemmbügel 10, 11 usw. wird also dadurch gewährleistet, dass jeder Klemmbügel in seinem oberen mittigen Bereich einen etwa nasenförmigen Ansatz 50 aufweist mit einer maximalen Breite, die kleiner ist als der Abstand zwischen den beiden Führungsrippen 25, 30, d.h. dass die Nase beim richtigen Einsetzen des Klemmbügels zwischen den Führungsrippen 25 oder 26 oder 27 verlagert werden kann.

## Patentansprüche

1. Sammelschienenadapter mit einem Gehäuse zur Aufnahme von Verbindungsschienen (24),
mit Klemmbügeln (10, 11, 12) zur Befestigung des Gehäuses an den Sammelschienen (2, 3, 4) und mit einer Abdeckplatte (30) zum berührungssicheren Abdecken der Verbindungsschienen (24) wobei zur Aufnahme der Klemmbügel (10, 11, 12) jeweils eine Kammer (6, 7, 8) vorgesehen ist, jede Kammer (6, 7, 8) durch zwei Kammerabschnitte (6a, 6b, 7a, 7b; 8a, 8b) gebildet ist, wobei die Kammerabschnitte (6a - 8b) in einer Richtung quer zur Sammelschiene (2, 3, 4) angeordnet sind zur alternativen Aufnahme jeweils eines Klemmbügels (10, 11, 12), **dadurch gekennzeichnet, dass** jeder Klemmbügel (10, 11, 12) eine vorspringende Nase (50) aufweist, die an einer Kante (51) des Adapters anstößt, wenn der Klemmbügel (10, 11, 12) unrichtig positioniert in einen der Kammerabschnitte (6a, 6b, 7a, 7b, 8a, 8b) eingesetzt ist, wobei benachbarte Kammerabschnitte (6a, 6b, 7a, 7b, 8a, 8b) durch eine Führungseinrichtung (25, 26, 27) voneinander geteilt sind, und dass eine Abdeckplatte (30) zum berührungssicheren Abdecken der Verbindungsschienen (24) vorgesehen ist.

2. Sammelschienenadapter nach Anspruch 1,
**dadurch gekennzeichnet, dass** jeder Kammerabschnitt (6a, 6b; 7a, 7b; 8a, 8b) größenmäßig so dimensioniert ist, dass jeweils ein Klemmbügel (10, 11, 12) einsetzbar ist. , und
dass die Führungseinheit (25, 26, 27) durch Führungsrippenpaare gebildet ist wobei die Nase (50) jedes Klemmbügels (10, 11, 12) eine Breite aufweist, die kleiner ist als der Abstand zwischen den Führungsrippenpaaren (25, 26, 27),
so dass ein Klemmbügel jeweils nur mit einer vorgegebenen Ausrichtung in einen der beiden Kammerabschnitte eingesetzt werden kann.

3. Adapter nach Anspruch 1 oder 2,
**dadurch gekennzeichnet, dass** die zueinander benachbarten Kammerabschnitte (6a, 6b; 7a, 7b; 8a, 8b) eine Abmessung in Längsrichtung des Adapters aufweisen, die größer ist als die Breite der jeweiligen Sammelschiene (2, 3, 4).

4. Adapter nach einem der vorangehenden Ansprüche,
**dadurch gekennzeichnet, dass** die Kammern (6, 7, 8) bei auf die Sammelschienen (2, 3, 4) aufgesetzten Betriebszustand im Kreuzungsbereich zwischen jeweils einer Sammelschiene (2, 3, 4) und einer der Verbindungsschienen (24) angeordnet sind.

5. Adapter nach wenigstens einem der vorangehenden Ansprüche,
**dadurch gekennzeichnet, dass** jede Kammer (6, 7, 8) durch Abdeckelemente (14, 15, 16) verschließbar ist.

6. Adapter nach Anspruch 5,
**dadurch gekennzeichnet, dass** die Abdeckelemente (14, 15, 16) kraftschlüssig auf die Abdeckplatte (30) aufsetzbar sind.

7. Adapter nach wenigstens einem der vorangehenden Ansprüche,
**dadurch gekennzeichnet, dass** die Abdeckplatte (30) im Bereich einer Stirnseite des Gehäuses Öffnungen (37, 38, 39) aufweist, die zum Einführen bzw. Einsetzen von Verbindungselementen (20, 21, 22) für ein Schaltgerät (18) oder dergleichen vorgesehen sind.

8. Adapter nach Anspruch 7,
**dadurch gekennzeichnet, dass** die Öffnungen (37, 38, 39) in der Abdeckplatte (30) in Form von Langlöchern ausgebildet sind.

9. Adapter nach Anspruch 8,
**dadurch gekennzeichnet, dass** Abdeckelemente zum zumindest teilweise Verschließen der Öffnungen (37, 38, 39) vorgesehen sind.

10. Adapter nach wenigstens einem der vorangehenden Ansprüche,
**dadurch gekennzeichnet, dass** die Abdeckplatte (30) parallel zueinander verlaufende nutförmige Vertiefungen (31, 32, 33) aufweist, zwischen welchen erhöhte Stege (34, 35) angeordnet sind.

11. Adapter nach wenigstens einem der vorangehenden Ansprüche,
**dadurch gekennzeichnet, dass** in der Abdeckplatte (30) Montageplatten (40 bis 43) vorgesehen sind, die verschiedene Gewindeöffnungen aufweisen.

12. Adapter nach Anspruch 11,
**dadurch gekennzeichnet, dass** die Montageplatten unterschiedlich große Gewindeöffnungen enthalten.

13. Adapter nach einem der vorangehenden Ansprüche,
**dadurch gekennzeichnet, dass** jeder Klemmbügel (10, 11, 12) zueinander parallele Fußabschnitte (10c, 10d, 11c, 11d, 12c, 12d) aufweist.

14. Adapter nach Anspruch 5 oder 6,
**dadurch gekennzeichnet, dass** die Abdeckelemente (14, 15, 16) ringförmige Öffnungen aufweisen die mit Klemmschrauben (10a, 11a, 12a) fluchten, welche in die Klemmbügel (10, 11, 12) eingeschraubt sind.

## Claims

1. Busbar adapter having a housing for accommodating connection rails (24),
having clamping brackets (10, 11, 12) for fastening the housing to the busbars (2, 3, 4) and having a cover plate (30) for the contact-safe covering of the connection rails (24), wherein, for the accommodation of the clamping brackets (10, 11, 12), a chamber (6, 7, 8) is provided in each case, each chamber (6, 7, 8) is formed by two chamber sections (6a, 6b, 7a, 7b; 8a, 8b), wherein the chamber sections (6a-8b) are disposed in a direction transverse to the busbars (2, 3, 4) for the alternative accommodation in each case of a clamping bracket (10, 11, 12),
**characterised in that** each clamping bracket (10, 11, 12) comprises a protruding nose (50) which abuts an edge (51) of the adapter when the clamping bracket (10, 11, 12) is inserted in an incorrect position in one of the chamber sections (6a, 6b, 7a, 7b, 8a, 8b), wherein adjacent chamber sections (6a, 6b, 7a, 7b, 8a, 8b) are separated from each other by a guiding device (25, 26, 27), and that a cover plate (30) is provided for the contact-safe covering of the connection rails (24).

2. Busbar adapter as claimed in claim 1,
**characterised in that** each chamber section (6a, 6b; 7a, 7b; 8a, 8b) is dimensioned in terms of size such that in each case a clamping bracket (10, 11, 12) is insertable, and that the guiding unit (25, 26, 27) is formed by guide rib pairs, wherein the nose (50) of each clamping bracket (10, 11, 12) has a width which is smaller than the distance between the guide rib pairs (25, 26, 27),
so that a clamping bracket can be inserted into one of the two chamber sections in each case only with a predetermined orientation.

3. Adapter as claimed in claim 1 or 2,
**characterised in that** the mutually adjacent chamber sections (6a, 6b; 7a, 7b; 8a, 8b) have a dimension in the longitudinal direction of the adapter which is larger than the width of the respective busbar (2, 3, 4).

4. Adapter as claimed in any one of the preceding claims,
**characterised in that**, in the operating state positioned onto the busbars (2, 3, 4), the chambers (6, 7, 8) are disposed in the intersection area in each case between a busbar (2, 3, 4) and one of the connection rails (24).

5. Adapter as claimed in at least one of the preceding claims,
**characterised in that** each chamber (6, 7, 8) can be closed by covering elements (14, 15, 16).

6. Adapter as claimed in claim 5,
**characterised in that** the covering elements (14, 15, 16) can be mounted on the cover plate (30) in a non-positive manner.

7. Adapter as claimed in at least one of the preceding claims,
**characterised in that** the cover plate (30) comprises openings (37, 38, 39) in the region of an end face of the housing, which openings are provided for the introduction or insertion of connection elements (20, 21, 22) for a switching unit (18) or the like.

8. Adapter as claimed in claim 7,
**characterised in that** the openings (37, 38, 39) are formed in the cover plate (30) in the form of elongate holes.

9. Adapter as claimed in claim 8,
**characterised in that** covering elements are provided for the at least partial closure of the openings (37, 38, 39).

10. Adapter as claimed in at least one of the preceding claims,
**characterised in that** the cover plate (30) comprises groove-shaped recesses (31, 32, 33) which extend in parallel with each other and between which raised webs (34, 35) are disposed.

11. Adapter as claimed in at least one of the preceding claims,
**characterised in that**, in the cover plate (30), mounting plates (40 to 43) are provided which comprise different threaded openings.

12. Adapter as claimed in claim 11,
**characterised in that** the mounting plates contain threaded openings of different sizes.

13. Adapter as claimed in any one of the preceding claims,
**characterised in that** each clamping bracket (10, 11, 12) comprises foot sections (10c, 10d, 11c, 11d, 12c, 12d) in parallel with each other.

14. Adapter as claimed in claim 5 or 6,
**characterised in that** the covering elements (14, 15, 16) comprise ring-shaped openings aligned with clamping screws (10a, 11a 12a) which are screwed into the clamping brackets (10, 11, 12).

## Revendications

1. Adaptateur de barres collectrices comportant un boîtier destiné à recevoir des barres de connexion (24),
comportant des étriers de serrage (10, 11, 12) pour fixer le boîtier aux barres collectrices (2, 3, 4) et une plaque de recouvrement (30) pour recouvrir les barres de connexion 24) en les protégeant du contact,
dans lequel une chambre (6, 7, 8) est prévue pour recevoir chacun des étriers de serrage (10, 11, 12), chaque chambre (6, 7, 8) étant formée de deux portions de chambre (6a, 6b, 7a, 7b ; 8a, 8b), les portions de chambre (6a à 8b) étant disposées dans une direction transversale à la barre collectrice (2, 3, 4) pour recevoir alternativement un des étriers de serrage (10, 11, 12),
**caractérisé en ce que** chaque étrier de serrage (10, 11, 12) comporte un tenon (50) saillant qui este adjacente à une arête (51) de l'adaptateur lorsque l'étrier de serrage est inséré en mauvaise position (10, 11, 12) dans une des portions de chambre (6a, 6b, 7a, 7b, 8a, 8b), les portions de chambre (6a, 6b, 7a, 7b, 8a, 8b) voisines étant séparées les unes des autres par un dispositif de guidage (25, 26, 27), et **en ce qu'**une plaque de recouvrement (30) est prévue pour recouvrir les barres de connexion (24).

2. Adaptateur de barres collectrices selon la revendication 1, **caractérisé en ce que** chaque portion de chambre (6a, 6b; 7a, 7b, 8a, 8b) a des dimensions telles qu'un étrier de serrage (10, 11, 12) peut y être respectivement inséré et que le dispositif de guidage (25, 26, 27) est formé de paires de nervures de guidage, le tenon (50) de chaque étrier de serrage (10, 11, 12) ayant une largeur inférieure à l'écart entre les paires de nervures de guidage (25, 26, 27), de sorte qu'un étrier de serrage ne peut être inséré dans une des deux portions de chambre que selon une direction définie.

3. Adaptateur selon la revendication 1 ou 2, **caractérisé en ce que** les portions de chambre (6a, 6b; 7a, 7b; 8a, 8b) voisines les unes des autres ont en direction longitudinale de l'adaptateur une dimension supérieure à la largeur des barres collectrices (2, 3, 4) correspondantes.

4. Adaptateur selon l'une des revendications précédentes, **caractérisé en ce que** les chambres (6, 7, 8) se trouvent respectivement dans la zone d'intersection entre une barre collectrice (2, 3, 4) et une des barres de connexion (24) lorsqu'elles sont placées en état de fonctionnement sur les barres collectrices (2, 3, 4).

5. Adaptateur selon au moins l'une des revendications précédentes, **caractérisé en ce que** chaque chambre (6, 7, 8) peut être fermée par des éléments de recouvrement (14, 15, 16).

6. Adaptateur selon la revendication 5, **caractérisé en ce que** les éléments de recouvrement (14, 15, 16) peuvent être placés sur la plaque de recouvrement (30) par adhérence.

7. Adaptateur selon au moins l'une des revendications précédentes, **caractérisé en ce que**, au niveau d'un côté frontal du boîtier, la plaque de recouvrement (30) comporte des ouvertures (37, 38, 39) qui sont prévues pour introduire ou à insérer des éléments de connexion (20, 21, 22) d'un appareil de coupure (18) ou équivalent.

8. Adaptateur selon la revendication 7, **caractérisé en ce que** les ouvertures (37, 38, 39) dans la plaque de recouvrement (30) sont prévue sous forme de trous oblongs.

9. Adaptateur selon la revendication 8, **caractérisé en ce que** des éléments de recouvrement sont prévus pour fermer au moins en partie les ouvertures (37, 38, 39).

10. Adaptateur selon au moins l'une des revendications précédentes, **caractérisé en ce que** la plaque de recouvrement (30) comporte des creux (31, 32, 33) en rainure parallèles les uns aux autres, entre lesquels sont placées des nervures (34, 35) surélevées.

11. Adaptateur selon au moins l'une des revendications précédentes, **caractérisé en ce que** dans la plaque de recouvrement (30) sont prévues des plaques de montage (40 à 43) qui comportent différentes ouvertures filetées.

12. Adaptateur selon la revendication 11, **caractérisé en ce que** les plaques de montage contiennent des ouvertures filetées de différentes dimensions.

13. Adaptateur selon l'une des revendications précédentes, **caractérisé en ce que** chaque étrier de serrage (10, 11, 12) comporte des portions en pied (10c, 10d, 11c, 11d, 12c, 12d) parallèles les unes aux autres.

14. Adaptateur selon la revendication 5 ou 6, **caractérisé en ce que** les éléments de recouvrement (14, 15, 16) comportent des ouvertures annulaires alignées avec des bornes à vis (10a, 11a, 12a) qui sont vissées dans les étriers de serrage (10, 11, 12).
